# EUROPÄISCHE PATENTSCHRIFT

(11) **EP 2 035 614 B1**
(45) Veröffentlichungstag und Bekanntmachung des Hinweises auf die Patenterteilung: **05.10.2011**
(21) Anmeldenummer: 07729929.5
(22) Anmeldetag: 06.06.2007
(51) Int. Cl.: D06F 39/02, F16L 33/22, F16L 33/03

(54) **WASCHMASCHINE MIT EINER BEFESTIGUNGSANORDNUNG FÜR EINE SCHLAUCHLEITUNG**
WASCHING MACHINE WITH AN ASSEMBLY FOR FIXING A HOSE
MACHINE À LAVER AVEC UN DISPOSITIF PERMETTANT DE FIXER UN TUYAU

(30) Priorität: 26.06.2006 DE 102006029201
(43) Veröffentlichungstag der Anmeldung: 18.03.2009
(73) Patentinhaber: BSH Bosch und Siemens Hausgeräte GmbH, 81739 München (DE)
(72) Erfinder: BOLDUAN, Edwin, 13629 Berlin (DE)
(86) Internationale Anmeldenummer: PCT/EP2007/055554
(87) Internationale Veröffentlichungsnummer: WO 2008/000596

(56) Entgegenhaltungen:
- EP-A- 1 297 778
- EP-A- 1 568 815
- DE-A1- 3 404 293
- DE-A1- 10 116 832
- US-A1- 2006 130 285

## Beschreibung

Die Erfindung betrifft eine Waschmachine mit einer Befestigungsanordnung für eine Schlauchleitung der im Oberbegriff des Patentanspruchs 1 angegebenen Art.

Eine derartige Befestigungsanordnung ist beispielsweise bereits aus der DE 101 16 832 A1 als bekannt zu entnehmen, bei welcher eine Mehrzahl von Aufnahmestutzen vorgesehen ist, welche als integrale Bestandteile eines Einspülkastens für eine Waschmaschine ausgebildet sind. Im Bereich der Aufnahmestutzen ist darüber hinaus ein großformatiger Schlauchhalter angeformt, welcher für jede der beiden Schlauchleitungen ein jeweiliges Sicherungselement umfasst. Die jeweiligen Sicherungselemente weisen dabei jeweils zwei stegartige Wände auf, welche in einem Abstand zum jeweils korrespondierenden Aufnahmestutzen für die jeweilige Schlauchleitung angeordnet sind. Die beiden stegartigen Wände jedes der Sicherungselemente sind dabei so beabstandet bzw. orientiert, dass eine Halterung bzw. Fixierung der Schlauchleitungen an den korrespondierenden Aufnahmestutzen gegeben ist. Ein derartiger Schlauchhalter hat jedoch den Nachteil, dass flexible Schläuche oder solche, die einen zu geringen Durchmesser aufweisen, aus dem Schlauchhalter herausrutschen können.

Eine weitere Befestigungsanordnung ist beispielsweise bereits aus der EP 1 297 778 A2 als bekannt zu entnehmen, bei der eine einerends an einer Umwälzpumpe einer Geschirrspülmaschine angeordnete Schlauchleitung andernends auf einen als Flansch ausgebildeten Aufnahmestutzen eines Durchlauferhitzers aufzustecken ist. Zur Fixierung der auf den Flansch aufgesteckten Schlauchleitung ist auf der Seite eines Schlauchendes des Durchlauferhitzers eine Muffe vorgesehen, welche die Schlauchleitung außenumfangseitig umgibt. Über die Muffe ist eine Schlauchklemme zu schieben, mit welcher die Muffe bzw. die Schlauchleitung gegenüber dem Aufnahmestutzen zu fixieren ist.

Als nachteilig bei dieser bekannten Befestigungsanordnung ist der Umstand anzusehen, dass die Befestigungsanordnung eine Mehrzahl von Bauteilen - namentlich den Flansch, die Muffe und die Schlauchklemme - benötigt, um die Schlauchleitung zuverlässig am Durchlauferhitzer zu befestigen. Dies bedingt nicht nur einen hohen Materialpreis, sondern auch einen dementsprechend hohen Montageaufwand.

USP 3,913,187 und US 2006/0130285 A1 offenbaren jeweils eine Art von Klemme, die zwei Sicherungsarme umfasst, welche durch Rasteinrichtungen miteinander verbunden werden können. Diese Art von großformatigen Klemmen wurde bereits verwendet, um Kabelbündel und Rohre in Autos und Gebäuden zu montieren. In Hausgeräten wurde diese Art Klemme bisher nicht eingesetzt.

Aufgabe der vorliegenden Erfindung ist es daher, eine Befestigungsanordnung für eine Waschmaschine der eingangs genannten Art zu schaffen, mit welcher sich eine besonders zuverlässige bzw. wirkungsvolle Festlegung der Schlauchleitung am zugehörigen Bauteil realisieren lässt.

Diese Aufgabe wird erfindungsgemäß durch eine Waschmaschine mit einer Befestigungsanordnung mit den Merkmalen des Patentanspruchs 1 gelöst. Vorteilhafte Ausgestaltungen mit zweckmäßigen und nicht-trivialen Weiterbildungen der Erfindung ergeben sich aus den abhängigen Patentansprüchen.

Die Erfindung betrifft somit eine Waschmaschine mit einer Einspülschale mit einem Oberteil und mit einer Befestigungsanordnung zur Befestigung einer Schlauchleitung an dem Oberteil mit einem Aufnahmestutzen, auf welchen die Schlauchleitung aufzustecken ist, und mit einem Sicherungselement, welches außenumfangseitig der aufgesteckten Schlauchleitung zur Fixierung gegenüber dem Aufnahmestutzen anzuordnen ist, wobei der Aufnahmestutzen und das Sicherungselement als einteiliges Befestigungselement ausgebildet sind und wobei das Befestigungselement einteilig mit dem Oberteil ausgebildet ist. Die Waschmaschine ist dadurch gekennzeichnet, dass das Sicherungselement zwei Sicherungsarme umfasst, welche zur Fixierung der auf den Aufnahmestutzen aufgesteckten Schlauchleitung miteinander zu verbinden sind.

Vorab bleibt festzuhalten, dass vorliegend der Aufnahmestutzen und das Sicherungselement als einteiliges Befestigungselement ausgebildet sind. Mit anderen Worten sind der Aufnahmestutzen und das Sicherungselement zu einem Teil zusammengefasst, welches dementsprechend kostengünstig in einem Herstellungsschritt - beispielsweise aus einem Kunststoff - hergestellt werden kann. Darüber hinaus lässt sich die Schlauchleitung äußerst einfach am einteiligen Befestigungselement montieren, da das Sicherungselement nicht als separates Bauteil - beispielsweise als Schlauchklemme - ausgebildet ist, sondern vielmehr bereits an Ort und Stelle relativ zu dem Aufnahmestutzen positioniert ist.

Ein weiterer Vorteil des Befestigungselements besteht darin, dass das Sicherungselement in einer definierten Position relativ zu dem Aufnahmestutzen angeordnet ist. Eine Fehlmontage kann somit beim vorliegenden Befestigungselement nicht mehr erfolgen. Eine besonders kostengünstige, einfache und wirkungsvolle Fixierung der Schlauchleitung an dem Aufnahmestutzen lässt sich nun realisieren, indem das Sicherungselement zwei Sicherungsarme umfasst, welche zur Fixierung der auf den Aufnahmestutzen aufgesteckten Schlauchleitung miteinander zu verbinden sind. Derartige Sicherungsarme sind beispielsweise bei einem aus Kunststoff hergestellten Befestigungselement besonders einfach anzuformen und sehr leicht miteinander zu verbinden.

Da das Befestigungselement somit integraler Bestandteil der Einspülschale selbst ist, lassen sich die Kosten für die Herstellung des Bauteils bzw. des Befestigungselements weiter reduzieren.

Eine zusätzliche Einsparung an Bauteilen lässt sich darüber hinaus realisieren, wenn die beiden Sicherungsarme an ihren einander zugewandten Enden jeweils ein Spannmittel aufweisen, welche zu einem Spannverschluss miteinander zu verbinden sind. Während bei den aus dem Stand der Technik bekannten Sicherungselementen häufig Schlauchklemmen mit einer zusätzlichen Spannschraube eingesetzt werden, sind demgegenüber an den Sicherungsarmen des Befestigungselements nach der Erfindung die Spannmittel integral angeformt.

Eine besonders einfache Verbindung der beiden Spannmittel lässt sich dabei realisieren, indem diese jeweils wenigstens ein zusammenwirkendes Rastmittel umfassen. Sind hingegen pro Spannmittel eine Mehrzahl von Rastmittel vorgesehen, so können die beiden Sicherungsarme in unterschiedlichen Sicherungspositionen miteinander verbunden werden. Hierdurch ist es möglich, eine Anpassung der beiden Sicherungsarme an toleranzbedingte Variationen des Querschnitts bzw. Außenumfang der Schlauchleitung auszugleichen.

Umfasst einer der beiden Sicherungsarme ein Aufnahmemaul, in welches der andere Sicherungsarm mit einem Endbereich eingesteckt werden kann, so ist eine besonders zuverlässige Positionierung bzw. eine sichere Verrastung der beiden Sicherungsarme möglich. Der der Schlauchleitung zugewandte Bereich des Aufnahmemauls sorgt dabei für eine besonders vorteilhafte Führung des gegenüberliegenden Sicherungsarms.

Als weiter vorteilhaft hat es sich erwiesen, die beiden Sicherungsarme mit jeweils einem Werkzeugangriff zu versehen, über welche die beiden zugeordneten Spannmittel gegeneinander zu bewegen sind. Hierdurch ist es beispielsweise mit einer entsprechend geformten Zange möglich, in die jeweils zugehörigen Sicherungsarme einzugreifen und diese zum Verspannen gegeneinander zu bewegen bzw. zum Öffnen des Sicherungselements voneinander wegzubewegen.

Steht der Aufnahmestutzen von einer zugehörigen Haltewand ab, die in einem Abstand zum Sicherungselement angeordnet ist, so kann auf einfache Weise ein Anschlag für ein gegenüber dem Sicherungselement überstehendes Ende der Schlauchleitung geschaffen werden. Durch dieses überstehende Ende ist eine besonders sichere Fixierung der Schlauchleitung an dem Aufnahmestutzen mittels des Sicherungselements gegeben.

Als weiter vorteilhaft hat es sich gezeigt, wenn der Aufnahmestutzen mit einem Ende gegenüber dem Sicherungselement übersteht. In diesem Bereich des Aufnahmestutzens kann hierdurch auf einfache Weise eine Schlauchklemme befestigt werden, falls beispielsweise das Sicherungselement beschädigt worden ist. Gleichfalls wäre es natürlich auch denkbar, eine derartige Schlauchklemme zwischen der Haltewand des Aufnahmestutzens und dem Sicherungselement anzuordnen.

Schließlich hat es sich als vorteilhaft gezeigt, das Befestigungselement aus einem Kunststoff herzustellen. Ein derartiges Teil ist nicht nur fertigungstechnisch einfach und dementsprechend kostengünstig herstellbar, sondern darüber hinaus weist ein Kunststoff auch die beispielsweise für die Sicherungsarme notwendige Flexibilität bzw. Elastizität auf.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:

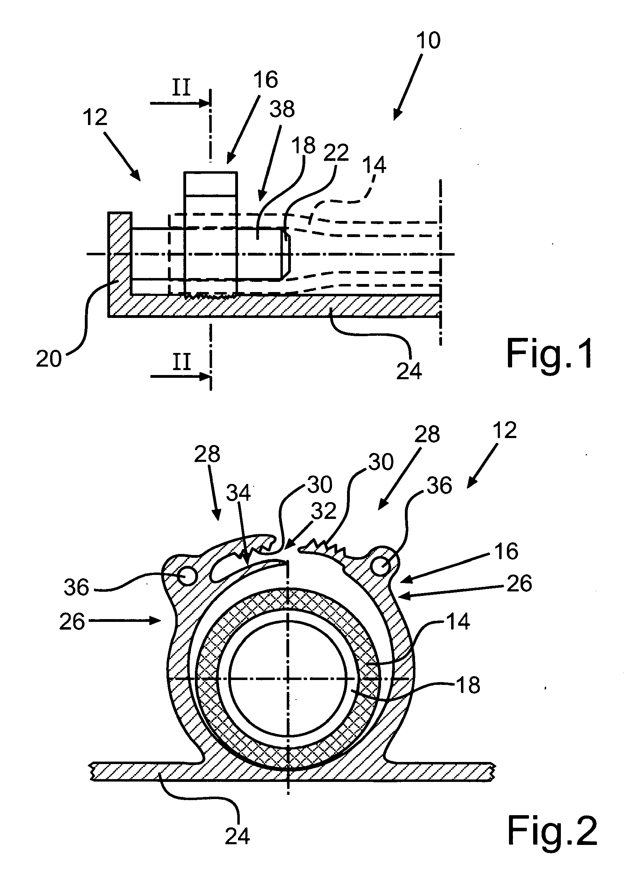

- Fig. 1: eine schematische Seitenansicht auf ein aufgeschnitten dargestelltes Oberteil ei- ner Einspülschale einer Waschmaschine mit einem Befestigungselement, welches einen von einer Haltewand abstehenden Aufnahmestutzen umfasst, auf welchen eine vorliegend lediglich gestrichelt angedeutete wasserführende Schlauchleitung aufzustecken und mittels eines einteilig mit dem Befestigungselement ausgebilde- ten Sicherungselements zu fixieren ist; und in
- Fig. 2: eine schematische Schnittansicht durch das ausschnittsweise dargestellte Oberteil der Einspülschale der Waschmaschine entlang der Linie II-II in Fig. 1, wobei im Wesentlichen die auf den Aufnahmestutzen aufgesteckte Schlauchleitung erkenn- bar ist, welche außenumfangseitig von zwei miteinander zu verbindenden Siche- rungsarmen des Sicherungselements umgeben ist.

In Fig. 1 ist in einer schematischen Seitenansicht ein bereichsweise aufgeschnitten dargestelltes Oberteil 10 einer Einspülschale einer Waschmaschine dargestellt. Einteilig mit dem Oberteil 10 der Einspülschale ist ein Befestigungselement 12 für eine vorliegend lediglich gestrichelt angedeutete wasserführende Schlauchleitung 14 ausgebildet, welche als wesentliche Bauteile ein Sicherungselement 16 sowie einen Aufnahmestutzen 18 umfasst. Der Aufnahmestutzen 18 steht von einer zugehörigen Haltewand 20 ab, welche einteilig mit diesem ausgebildet ist. Die Haltewand 20 bildet dabei auch eine Begrenzungswand des Oberteils 10 der Einspülschale der Waschmaschine. Der Aufnahmestutzen 18 ist zum leichten Aufschieben der Schlauchleitung 14 an seinem der Haltewand 20 abgewandten Ende mit einer Fase 22 versehen. Die Schlauchleitung 14 kann dabei im vorliegenden Ausführungsbeispiel bis zum Anschlag an der Haltewand 20 auf den Aufnahmestutzen 18 aufgeschoben werden. Über die Schlauchleitung 14 und den hohl ausgebildeten Aufnahmestutzen 18 kann somit Frischwasser in die Einspülschale der Waschmaschine gelangen, um hierbei bevorratetes Waschmittel in den nicht dargestellten Laugenbehälter der Waschmaschine mitzunehmen.

In Zusammenschau mit Fig. 2, welche in einer gegenüber Fig. 1 vergrößerten Schnittansicht das zur Festlegung der Schlauchleitung 14 dienende Befestigungselement 12 entlang der Linie II-II in Fig. 1 zeigt, wird insbesondere der Aufbau des Sicherungselements 16 näher verdeutlicht. Das Sicherungselement 16 ist einteilig mit einer Grundplatte 24 des Oberteils 10 bzw. des Befestigungselements 12 ausgebildet und umfasst zwei Sicherungsarme 26, welche außenumfangsseitig der auf den Aufnahmestutzen 18 aufgesteckten Schlauchleitung 14 angeordnet sind. Die Sicherungsarme 26 dienen dabei zur Fixierung bzw. Festlegung auf den Aufnahmestutzen 18 aufgesteckten bzw. aufgeschobenen Schlauchleitung 14. Darüber hinaus dienen die Sicherungsarme 26 zur Abdichtung der Schlauchleitung 14 gegenüber dem Aufnahmestutzen 18, indem sie derart miteinander verbunden werden, dass die Schlauchleitung 14 mit einem entsprechenden umfangsseitigen Haltedruck gegen den Aufnahmestutzen 18 gezwängt wird.

Zur Verbindung miteinander umfassen die beiden Sicherungsarme 26 an ihren einander zugewandten Enden jeweils ein Spannmittel 28, welche zu einem Spannverschluss miteinander zu verbinden sind. Im vorliegenden Ausführungsbeispiel sind hierzu an jedem der beiden Spannmittel 28 jeweils eine Mehrzahl von im Querschnitt zahnförmigen Rastmitteln 30 in Reihe hintereinander angeordnet, wodurch die Spannmittel 28 bzw. die Sicherungsarme 26 in unterschiedlichen Sicherungspositionen miteinander zu verbinden sind. Dementsprechend können die Sicherungsarme 26 bzw. deren Spannmittel 28 in unterschiedlichen Sicherungspositionen eingestellt werden, je nach dem, welchen Querschnitt die Schlauchleitung 14 aufweist. Hierdurch ist es auf einfache. Weise möglich, toleranzbedingte Variationen im Querschnitt der Schlauchleitung 14 auszugleichen. In einer äußerst einfachen Ausführungsform kann auch lediglich ein Rastmittel 30 pro Spannmittel 28 des zugehörigen Sicherungsarms 26 vorgesehen werden kann.

Der in Fig. 2 linke Sicherungsarm 26 umfasst vorliegend ein Aufnahmemaul 32, in welches das Ende des anderen Sicherungsarms 26 eingesteckt werden kann. Durch das Aufnahmemaul 32 ist dabei ein Maulbereich 34 geschaffen, der eine besonders gute Führung des Endes des gegenüberliegenden Sicherungsarms 26 gewährleistet. Darüber hinaus ist durch den Maulbereich 34 gewährleistet, dass beim Spannen des Sicherungselements 16 der in Fig. 2 rechte Sicherungsarm 26 nicht unmittelbar auf der Schlauchleitung 14 bewegt wird.

Beide Sicherungsarme 26 weisen vorliegend jeweils einen Werkzeugangriff 36 in Form einer im Querschnitt kreisrunden Öffnung auf, in welche beispielsweise mit einer Spezialzange eingegriffen werden kann. Hierdurch ist es möglich, beide Spannmittel 28 der Sicherungsarme 26 auf einfache Weise miteinander zu verbinden bzw. zu verspannen, um die zur sicheren Fixierung und Abdichtung der Schlauchleitung 14 gegenüber dem Aufnahmestutzen 18 notwendige Haltekraft zu erzeugen. Über die Werkzeugangriffe 36 ist es gegebenenfalls auch möglich, die beiden Spannmittel 28 der Sicherungsarme 26 im Bedarfsfall auseinander zu bewegen bzw. zu trennen. Da die beiden Sicherungsarme 26 im vorliegenden Ausführungsbeispiel gemeinsam mit dem Befestigungselement 12 bzw. dem gesamten Oberteil 10 aus Kunststoff geschaffen sind, weisen sie die zur Verspannung notwendige Nachgiebigkeit bzw. Elastizität auf. Jedoch könnte das Befestigungselement 12 auch aus einem anderen Material beschaffen sein.

Schließlich ist aus Fig. 1 erkennbar, dass der Aufnahmestutzen 18 mit einem Ende 38 gegenüber dem Sicherungselement 16 bzw. den beiden Sicherungsarmen 26 übersteht. Hierdurch ist es beispielsweise möglich, bei einer Beschädigung des Sicherungselements 16 bzw. der Sicherungsarme 26 eine Schlauchklemme zu verwenden, um die Schlauchleitung 14 sicher am Aufnahmestutzen 18 zu fixieren. Die Schlauchklemme kann dabei auch zusätzlich zu dem Sicherungselement 16 eingesetzt werden. Die Schlauchklemme könnte auch im Bereich zwischen der Haltewand 20 und dem Sicherungselement 16 bzw. deren Sicherungsarme 26 angeordnet sein.

## Patentansprüche

1. Waschmaschine mit einer Einspülschale mit einem Oberteil (10) und mit einer Befestigungsanordnung zur Befestigung einer Schlauchleitung (14) an dem Oberteil (10) mit einem Aufnahmestutzen (18), auf welchen die Schlauchleitung (14) aufzustecken ist, und mit einem Sicherungselement (16), welches außenumfangseitig der aufgesteckten Schlauchleitung (14) zur Fixierung gegenüber dem Aufnahmestutzen (18) anzuordnen ist, wobei der Aufnahmestutzen (18) und das Sicherungselement (16) als einteiliges Befestigungselement (12) ausgebildet sind und wobei das Befestigungselement (12) einteilig mit dem Oberteil (10) ausgebildet ist,
**dadurch gekennzeichnet,**
**dass** das Sicherungselement (16) zwei Sicherungsarme (26) umfasst, welche zur Fixierung der auf den Aufnahmestutzen (18) aufgesteckten Schlauchleitung (14) miteinander zu verbinden sind.

2. Waschmaschine nach Anspruch 1, **dadurch gekennzeichnet, dass** die beiden Sicherungsarme (26) an ihren einander zugewandten Enden jeweils ein Spannmittel (28) aufweisen, welche zu einem Spannverschluss miteinander zu verbinden sind.

3. Waschmaschine nach Anspruch 2, **dadurch gekennzeichnet, dass** die beiden Spannmittel (28) jeweils wenigstens ein miteinander zusammenwirkendes Rastmittel (30) umfassen.

4. Waschmaschine nach Anspruch 3, **dadurch gekennzeichnet, dass** jedes Spannmittel (28) eine Mehrzahl von Rastmitteln (30) umfasst, wodurch die Sicherungsarme (26) in unterschiedlichen Sicherungspositionen miteinander zu verbinden sind.

5. Waschmaschine nach einem der vorhergehenden Ansprüche, **dadurch gekennzeichnet, dass** einer der Sicherungsarme (26) ein Aufnahmemaul (32) umfasst, in welches der andere Sicherungsarm (26) einsteckbar ist.

6. Waschmaschine nach einem der Ansprüche 2 bis 5, **dadurch gekennzeichnet, dass** die Sicherungsarme (26) jeweils einen Werkzeugangriff (36) aufweisen, über welche die beiden zugeordneten Spannmittel (28) gegeneinander zu bewegen sind.

7. Waschmaschine nach einem der vorhergehenden Ansprüche, **dadurch gekennzeichnet, dass** der Aufnahmestutzen (18) von einer zugehörigen Haltewand (20) absteht, die in einem Abstand zum Sicherungselement (16) verläuft.

8. Waschmaschine nach einem der vorhergehenden Ansprüche, **dadurch gekennzeichnet, dass** der Aufnahmestutzen (18) mit einem Ende (38) gegenüber dem Sicherungselement (16) übersteht.

9. Waschmaschine nach einem der vorhergehenden Ansprüche, **dadurch gekennzeichnet, dass** des Befestigungselement (12) aus einem Kunststoff hergestellt ist.

## Claims

1. Washing machine with a flushing-in bowl with an upper part (10) and with a fastening arrangement for fastening a hose duct (14) to the upper part (10) by a receiving stub pipe (18), onto which the hose duct (14) is plugged, and with a securing element (16) which is to be arranged at the outer circumferential side of the plugged-on hose duct (14) for fixing relative to the receiving stub pipe (18), wherein the receiving stub pipe (18) and the securing element (16) are constructed as an integral fastening element (12) and wherein the fastening element (12) is constructed integrally with the upper part (10), **characterised in that** the securing element (16) comprises two securing arms (26) which are to be connected together for fixing the hose duct (14) plugged onto the receiving stub pipe (18).

2. Washing machine according to claim 1, **characterised in that** the two securing arms (26) have at each of their mutually facing ends a respective clamping means (28), which clamping means are to be connected together to form a clamping closure.

3. Washing machine according to claim 2, **characterised in that** the two clamping means (28) respectively comprise at least one mutually co-operating detent means (30).

4. Washing machine according to claim 3, **characterised in that** each clamping means (28) comprises a plurality of detent means (30), whereby the securing arms (26) are to be connected together in different securing positions.

5. Washing machine according to any one of the preceding claims, **characterised in that** one of the securing arms (26) comprises a receiving mouth (32) into which the other securing arm (26) can be inserted.

6. Washing machine according to any one of claims 2 to 5, **characterised in that** the securing arms (26) respectively comprise a tool engagement means (36) by way of which the two associated clamping means (28) can be moved relative to one another.

7. Washing machine according to any one of the preceding claims, **characterised in that** the receiving stub pipe (18) protrudes from an associated mounting wall (20) extending at a spacing from the securing element (16).

8. Washing machine according to any one of the preceding claims, **characterised in that** the receiving stub pipe (18) protrudes by an end (38) relative to the securing element (16).

9. Washing machine according to any one of the preceding claims, **characterised in that** the fastening element (12) is made of a plastics material.

## Revendications

1. Lave-linge comprenant un compartiment d'arrivée d'eau muni d'une partie supérieure (10) et d'un dispositif de fixation pour la fixation d'un tuyau (14) sur la partie supérieure (10) à l'aide d'un embout de logement (18), sur lequel le tuyau (14) est à emboîter, et muni d'un élément de sûreté (16) lequel est à disposer côté circonférence extérieure du tuyau emboîté (14) pour la fixation par rapport à l'embout de logement (18), l'embout de logement (18) et l'élément de sûreté (16) étant réalisés en tant qu'élément de fixation (12) d'une seule pièce et l'élément de fixation (12) étant réalisé d'une seule pièce avec la partie supérieure (10),
**caractérisé en ce**
**que** l'élément de sûreté (16) comprend deux bras de sûreté (26), lesquels sont à raccorder entre eux pour la fixation du tuyau (14) emboîté sur l'embout de logement (18).

2. Lave-linge selon la revendication 1, **caractérisé en ce que** les deux bras de sûreté (26) présentent un moyen de serrage (28) sur leurs extrémités tournées l'une vers l'autre, lesquelles sont à raccorder entre elles en une fermeture de serrage.

3. Lave-linge selon la revendication 2, **caractérisé en ce que** les deux moyens de serrage (28) comprennent respectivement au moins un moyen d'encliquetage (30) agissant réciproquement.

4. Lave-linge selon la revendication 3, **caractérisé en ce que** chaque moyen de serrage (28) comprend une pluralité de moyens d'encliquetage (30), sur quoi les bras de sûreté (26) sont à raccorder entre eux dans différentes positions de sûreté.

5. Lave-linge selon l'une quelconque des revendications précédentes, **caractérisé en ce que** l'un des bras de sûreté (26) comprend une mâchoire de logement (32), dans laquelle l'autre bras de sûreté (26) est emboîtable.

6. Lave-linge selon l'une quelconque des revendications 2 à 5, **caractérisé en ce que** les bras de sûreté (26) présentent respectivement une attaque d'outil (36) au moyen de laquelle les deux moyens de serrage correspondants (28) sont à déplacer l'un contre l'autre.

7. Lave-linge selon l'une quelconque des revendications précédentes, **caractérisé en ce que** l'embout de réception (18) dépasse d'une paroi de maintien correspondante (20), qui s'étend avec un écart par rapport à l'élément de sûreté (16).

8. Lave-linge selon l'une quelconque des revendications précédentes, **caractérisé en ce que** l'embout de logement (18) dépasse avec une extrémité (38) par rapport à l'élément de sûreté (16).

9. Lave-linge selon l'une quelconque des revendications précédentes, **caractérisé en ce que** l'élément de fixation (12) est fabriqué dans une matière plastique.
